# EUROPÄISCHE PATENTANMELDUNG

(11) **EP 2 811 626 A1**
(43) Veröffentlichungstag der Anmeldung: **10.12.2014**
(21) Anmeldenummer: 13170736.6
(22) Anmeldetag: 06.06.2013
(51) Int. Cl.: H02K 9/18

(54) **Kühlungsmöglichkeit für eine elektrodynamische Maschine**

(71) Anmelder: Siemens Aktiengesellschaft, 80333 München (DE)
(72) Erfinder: Jäkel, Christian, 45468 Mülheim an der Ruhr (DE)

(57) **Zusammenfassung**

Die Erfindung betrifft eine Kühlungsmöglichkeit für einen elektrischen Generator (1), wobei zusätzlich zu den in der Regel stirnseitig angeordneten ersten Lüfterschaufeln (8), zweite (17) und dritte (21) Lüfterschaufeln zwischen dem Läufer (3) und dem Stator (4) ausgebildet sind.

## Beschreibung

Die Erfindung betrifft eine elektrodynamische Maschine, insbesondere einen elektrischen Generator, umfassend einen Läufer mit einer Läuferwicklung, einem Stator mit einer Statorwicklung, wobei der Stator um den Läufer angeordnet ist und auf dem Läufer angeordnete erste Lüfterschaufeln, wobei die ersten Lüfterschaufeln stirnseitig am Läufer angeordnet sind, wobei zwischen dem Läufer und dem Stator ein Kühlungskanal gebildet ist.

Elektrodynamische Maschinen wie z.B. elektrische Generatoren werden unter anderem für die kommunale Energieversorgung eingesetzt. Solche elektrischen Generatoren werden üblicherweise in Kraftwerken eingesetzt, wobei als Antriebseinheit für den elektrischen Generator eine Dampfturbine oder eine Gasturbine eingesetzt wird. Die Leistungen solcher in Kraftwerken eingesetzter elektrischer Generatoren sind vergleichsweise hoch und betragen in manchen Fällen mehrere 100MVA. Die Ströme, die in den Wicklungen des elektrischen Generators fließen, erreichen sehr hohe Stromstärken. Dies betrifft die Statorwicklung und die Läuferwicklung. Daher müssen sowohl die Stator- als auch die Läuferwicklung mit geeigneten Kühlungsmöglichkeiten gekühlt werden.

Es ist bekannt, ein oder zwei Gebläse auf der Welle stirnseitig anzuordnen, um ein Kühlungsmedium im Generator umzuwälzen.

Die im elektrischen Generator entstehenden Wärmeverluste bei der Umwandlung von mechanischer in elektrische Energie müssen dem System entzogen werden, damit bestimmte Isolierungswerkstoffe unter einer Grenztemperatur betrieben werden können. Durch ein Strömungsnetzwerk wird die Verteilung in die wärmeführenden Bereiche sichergestellt. Allerdings ist dies schwierig regelbar und es ist daher kaum möglich, bestimmte hochbelastete Bereiche mit einem höheren Kühlgasvolumenstrom zu versorgen.

Die im Stand der Technik bekannten Gebläse werden jeweils direkt vor oder nach den Kühlern angeordnet und wälzen den Gesamtvolumenstrom um. Sofern zwei Gebläse jeweils stirnseitig am Rotor eingesetzt werden, wird die Hälfte des Gesamtvolumenstroms umgewälzt.

Es ist Aufgabe der Erfindung, eine weitere Kühlungsmöglichkeit für einen elektrischen Generator anzugeben.

Diese Aufgabe wird gelöst durch eine elektrodynamische Maschine, insbesondere einen elektrische Generator, umfassend einen Läufer mit einer Läuferwicklung, einen Stator mit einer Statorwicklung, wobei der Stator um den Läufer angeordnet ist und auf dem Läufer angeordnete erste Lüfterschaufeln angeordnet sind, wobei die ersten Lüfterschaufeln stirnseitig am Läufer angeordnet sind, wobei zwischen den Läufern und dem Stator ein Kühlungskanal gebildet ist, wobei in dem Kühlungskanal auf dem Läufer zweite Lüfterschaufeln angeordnet sind.

Somit wird mit der Erfindung der Weg eingeschlagen, auf dem Läufer mehr als ein oder zwei Gebläselauf- bzw. Leitschaufelreihen anzuordnen, so dass eine aktive mehrflutige Versorgung mit Kühlmedium und der wärmeführenden Bereiche ermöglicht ist. Hierbei ist von Bedeutung, dass die einzelnen Bereiche im Generator separat mit einem Kühlgasstrom versorgt werden können. Dadurch ist der Generator auf bestimmte Betriebspunkte optimierbar.

Ein weiterer Vorteil der Erfindung ist, dass durch die Anordnung einer weiteren Lüfterschaufel ein niedrigerer Gesamtvolumenstrom benötigt wird und dadurch der Strömungswiderstand im Kühlkanal des Generators verringert wird.

Dadurch ist eine weitere Verringerung des Strömungswiderstands des Strömungsmediums zu erwarten. Dies gelingt durch eine geeignete Auslegung der Gebläse und des Generatordesigns. Die Folge ist, dass die Antriebsleistung der Gebläse verringert wird und somit zu einer Erhöhung des Wirkungsgrades des Generators führt.

Ebenso ist ein Vorteil der Erfindung, dass eine Verbesserung und Optimierung der Teillastwirkungsgrade möglich sind, wenn der Generator entsprechend ausgelegt ist. Darüber hinaus ist es möglich, die axiale Baulänge des Generators zu verringern, da die Gebläse in bereits bestehende Bereiche des Generators integriert werden können.

Vorteilhafte Weiterbildungen sind in den Unteransprüchen angegeben.

So ist in einer ersten vorteilhaften Weiterbildung ein zweiter Kühlungskanal ausgebildet, wobei dieser zweite Kühlungskanal zwischen dem Stator und einem um den Stator angeordneten Außengehäuse ausgebildet ist. Der Stator ist dabei derart ausgebildet, dass eine strömungstechnische Verbindung zwischen dem Kühlungskanal und dem zweiten Kühlungskanal entsteht. Ein Rückführungskanal ist zum Rückführen von Kühlmedium aus dem zweiten Kühlungskanal zu einem Kühler ausgebildet, wobei im Rückkühlungskanal dritte Lüfterschaufeln angeordnet sind.

Somit werden in dieser vorteilhaften Weiterbildung weitere Lüfterschaufeln berücksichtigt, um die Kühlungsmöglichkeit zu verbessern.

Vorteilhafterweise sind die Lüfterschaufeln auf dem Läufer angeordnet.

Vorteilhafterweise wird die elektrodynamische Maschine zum Einsatz von Kühlluft als Kühlmedium oder zum Einsatz von Wasserstoff als Kühlmedium ausgebildet.

Im Folgenden wird die Erfindung anhand eines Ausführungsbeispiels nun näher erläutert.

Darin zeigt in schematischer Weise:
- Figur: eine schematische Querschnittansicht eines erfindungsgemäßen Generators.

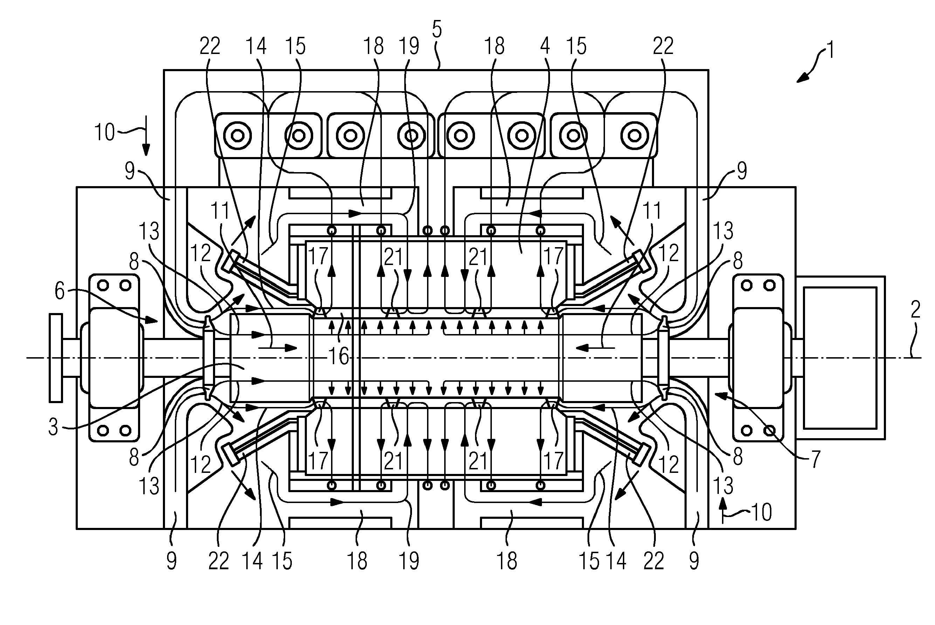

Die Figur zeigt einen elektrischen Generator 1 als Ausführungsform einer elektrodynamischen Maschine. Der elektrische Generator 1 umfasst einen um eine Rotationsachse 2 drehbar gelagerten Läufer 3 und einen um den Läufer 3 angeordneten Stator 4. Der Läufer 3 weist eine nicht näher dargestellte Läuferwicklung und der Stator 4 eine nicht näher dargestellte Statorwicklung auf. Um den Stator 4 ist ein Außengehäuse 5 angeordnet. Der Läufer 3 umfasst eine erste Stirnseite 6 und eine zweite Stirnseite 7. Auf der ersten Stirnseite 6 sind erste Lüfterschaufeln 8 angeordnet. Über einen Zuführkanal 9 wird Kühlmedium zu den ersten Lüfterschaufeln 8 zugeführt. Auf der zweiten Stirnseite 7 ist ebenfalls eine erste Lüfterschaufel 8 angeordnet, wobei über einen Zuführkanal 9 Kühlungsmedium zu den ersten Lüfterschaufeln 8 geführt wird.

Hierbei bewegt sich das Kühlmedium zunächst in einer radialen Richtung 10 in Richtung der Rotationsachse 2 und anschließend in axialer Richtung 11 in Richtung der Läuferwicklung.

Das Kühlungsmedium wird nach der ersten Lüfterschaufel 8 in zwei Teilströme aufgeteilt, und zwar in einen ersten Teilstrom 12 und in einen zweiten Teilstrom 13. Der erste Teilstrom 12 strömt durch Kühlkanäle innerhalb des Läufers 3, was durch die Pfeile in der Läuferwicklung symbolisiert wird. Dabei strömt der erste Teilstrom 12 zunächst in der axialen Richtung 11 und an einer geeigneten Stelle in eine radiale Richtung 10.

Der zweite Teilstrom 13 strömt oberhalb der Läuferoberfläche entlang und teilt sich in einen dritten Teilstrom 14 und einen vierten Teilstrom 15 auf. Der dritte Teilstrom 14 strömt in einen Kühlungskanal 16, der zwischen dem Läufer 3 und dem Stator 4 angeordnet ist, entlang. Dabei wird der dritte Teilstrom 14 an geeigneten Stellen von der axialen Richtung 11 in die radiale Richtung 10 umgelenkt und strömt durch den Stator 4 und anschließend außerhalb des Stators 4, aber innerhalb des Außengehäuses 5, wieder zurück über Kühler in den Zuführkanal 9. In dem Kühlungskanal 16 sind auf dem Läufer 3 zweite Lüfterschaufeln 17 angeordnet. Die zweiten Lüfterschaufeln 17 umfassen Gebläselauf- und Gebläseleitschaufelreihen (nicht näher dargestellt).

Der vierte Teilstrom 15 strömt in einen zweiten Kühlungskanal 18 zunächst außerhalb des Stators 4 entlang und wird anschließend in die radiale Richtung 10 umgelenkt. Der Stator 4 ist derart ausgebildet, dass eine strömungstechnische Verbindung (symbolisiert durch Bezugszeichen 19) zwischen dem zweiten Kühlungskanal 18 und dem Kühlungskanal 16 entsteht. Der elektrische Generator 1 ist derart ausgebildet, dass das Kühlungsmedium aus dem zweiten Kühlungskanal 18 über einen Rückkühlungskanal (symbolisiert durch das Bezugszeichen 20) zu einem Kühler geführt wird, wobei das Kühlmedium im Kühler wieder abgekühlt wird. Im Rückkühlungskanal 20 sind dritte Lüfterschaufeln 21 angeordnet. Die dritten Lüfterschaufeln 21 umfassen nicht näher dargestellte Gebläselaufschaufelreihen und Gebläseleitschaufelreihen.

Die dritten Lüfterschaufeln 21 sind auf dem Läufer 3 angeordnet. Die dritten Lüfterschaufeln 21 umfassen Gebläselauf- und Gebläseleitschaufelreihen (nicht näher dargestellt).

Der elektrische Generator 1 ist zum Einsatz von Kühlluft als Kühlmedium 3 ausgebildet. In einer alternativen Ausführungsform ist der elektrische Generator 1 zum Einsatz von Wasserstoff als Kühlmedium ausgebildet.

Der dritte Teilstrom 14 strömt nach der Durchströmung durch die zweiten Lüfterschaufeln 17 durch den Stator 4. Der vierte Teilstrom 15 strömt nach Durchströmung durch den zweiten Kühlungskanal 18 durch den Stator 4, anschließend durch die dritten Lüfterschaufeln 21 und danach wieder durch den Stator 4 zu Kühlern und von dort aus zum Zuführkanal 9.

Der in der Figur dargestellte elektrische Generator 1 ist im Wesentlichen symmetrisch ausgebildet, so dass die Bezugszeichen im Wesentlichen doppelt in der Figur vorkommen.

Der zweite Teilstrom 13 strömt ebenso durch den Statorwickelkopf 22 und von dort in den zweiten Kühlungskanal 18.

## Patentansprüche

1. Elektrodynamische Maschine,
insbesondere elektrischer Generator (1),
umfassend
einen Läufer (3) mit einer Läuferwicklung,
einem Stator (4) mit einer Statorwicklung,
wobei der Stator (4) um den Läufer angeordnet (3) ist und auf dem Läufer (3) erste Lüfterschaufeln (8) angeordnet sind,
wobei die ersten Lüfterschaufeln (8) stirnseitig (6, 7) am Läufer (3) angeordnet sind,
wobei zwischen dem Läufer (3) und dem Stator (4) ein Kühlungskanal (16) gebildet ist,
**dadurch gekennzeichnet dass**,
in dem Kühlungskanal (16) auf dem Läufer (3) zweite Lüfterschaufeln (17) angeordnet sind.

2. Elektrodynamische Maschine nach Anspruch 1,
mit einem um den Stator (4) angeordneten Außengehäuse (5), wobei zwischen dem Stator (4) und dem Außengehäuse (5) ein zweiter Kühlungskanal (18) ausgebildet ist,
wobei der Stator (4) derart ausgebildet ist, dass eine strömungstechnische Verbindung (19) zwischen dem Kühlungskanal (16) und dem zweiten Kühlungskanal (18) entsteht, wobei ein Rückkühlungskanal (20) zum Rückführen von Kühlmedium aus dem zweiten Kühlungskanal (18) zu einem Kühler ausgebildet ist,
wobei im Rückkühlungskanal (20) dritte Lüfterschaufeln (21) angeordnet sind.

3. Elektrodynamische Maschine nach Anspruch 2,
wobei die dritten Lüfterschaufeln (21) auf dem Läufer (3) angeordnet sind.

4. Elektrodynamische Maschine nach einem der vorhergehenden Ansprüche,
mit einem Zuführkanal (9) für Kühlmedium,
wobei der Zuführkanal (9) zum Zuführen von Kühlmedium zu den ersten Lüfterschaufeln (8) ausgebildet ist.

5. Elektrodynamische Maschine nach einem der vorhergehenden Ansprüche,
wobei die elektrodynamische Maschine zum Einsatz von Kühlluft als Kühlmedium ausgebildet ist.

6. Elektrodynamische Maschine nach einem der Ansprüche 1 bis 4,
wobei die elektrondynamische Maschine zum Einsatz von Wasserstoff als Kühlmedium ausgebildet ist.
